# EUROPEAN PATENT SPECIFICATION

(11) **EP 0 463 018 B1**
(45) Date of publication and mention of the grant of the patent: **18.09.1996**
(21) Application number: 90904358.0
(22) Date of filing: 15.03.1990
(51) Int. Cl.: F16J 15/46

(54) **SEALING**
DICHTUNGEN
JOINT D'ETANCHEITE

(30) Priority: 16.03.1989 FI 890882
(43) Date of publication of application: 02.01.1992
(73) Proprietor: UNICRAFT OY, SF-00210 Helsinki (FI)
(72) Inventor: RINNE, Erkki, SF-02260 Espoo (FI)
(74) Representative: Vogeser, Werner, Dipl.-Ing.
(86) International application number: FI9000065
(87) International publication number: WO9010809

(56) References cited:
- DE-A- 1 918 804
- DE-A- 2 931 779
- GB-A- 1 073 150
- US-A- 4 300 775

## Description

The present invention relates to a sealing as set forth in the preamble of claim 1 for packing a gap between two surfaces.

A sealing according to the pramble of claim 1 is disclosed in DE-A-2 931 779. This sealing comprises an annular sealing having conical sealing surfaces. To prevent the annular sealing from migrating in the gap between the parts to be sealed the sealing is provided with a reduced diameter section resulting in an annular gap in the sealing space.

An object of the invention is to provide an activable sealing, particularly a hydraulic-oil or compressed-air or mechanically operated sealing, said sealing being capable of withstanding substantial pressures, even pressures of several hundred bars, but being well suitable also for minor pressures. In the context of this application, compressed air refers not only to normal air but to all gases or gas mixtures. A sealing of the invention finds a plurality of applications e.g. in mechanical components having considerable pressure differences on different sides of a point to be sealed, e.g. flap and ball valves, pistons etc. This type of sealing can also be used e.g. for packing the joints of underwater tunnel elements and for sealing of various door and window structures, particularly in objects intended for marine conditions and in corresponding structures. In order to achieve this object, a sealing of the invention is characterized by what is set forth in the characterizing clause of claim 1.

In view of the operation of a sealing of the invention it is essential that elastomer does not adhere to wall surfaces, thus allowing the displacement of elastomer in an elastomer space and/or passages in a pressurized state to a reasonable extent. The behaviour of elastomer resembles that of a fluid in the sense that it is incompressible, the difference from a fluid being, however, that elastomer is self-restoring after depressurization. The preliminary tests have indicated that at a pressure of over 200 bars, e.g. in a passage having a diameter of circa 5 mm and a length of circa 500 mm, there occurs a nearly complete equalization of pressure throughout the entire passage. The non-adherence of elastomer to the walls of passages or elastomer spaces can be enhanced e.g. by the application of various lubricants which are compatible with any given elastomer. The elastomer passages/spaces must generally be worked to be larger than corresponding fluid passages.

If necessary, the elastomer can nevertheless be bonded e.g. to a sealing layer of some harder material or, when using e.g. mechanical pistons, to the head of a piston by the application of an appropriate binder, such as e.g. Chemosil X 5201, available from e.g. Henkel AG (FRG).

The most significant advantage gained by a sealing of the invention is that the installation work will be facilitated as the sealing can be cast or molded to position in an already assembled device, thus avoiding damages to the sealing. In addition, after the moulding operation the sealing can be pressurized/adjusted to a desired pressure reading.

Another advantage gained by a sealing of the invention is a considerable pressure resistance and, depending on selected materials, also a considerable heat resistance. Another advantage is that a system provided by the sealing and its pressurizing medium can be designed as a closed system, whereby e.g. possible spills of hydraulic oil can be reliably prevented.

The invention will now be described with reference made to the accompanying drawings, in which:
- figs. 1 - 4: illustrate a few embodiments of a sealing of the invention,
- fig. 5: shows a pressurizing unit for the hydraulic oil used in a sealing of the invention,
- figs. 6a - 6c: illustrate a few embodiments of "mechanical" pressurizing means used in a sealing of the invention, and
- figs. 7a and 7b: show a combination of a sealing of the invention and a "mechanical" pressurizing means.

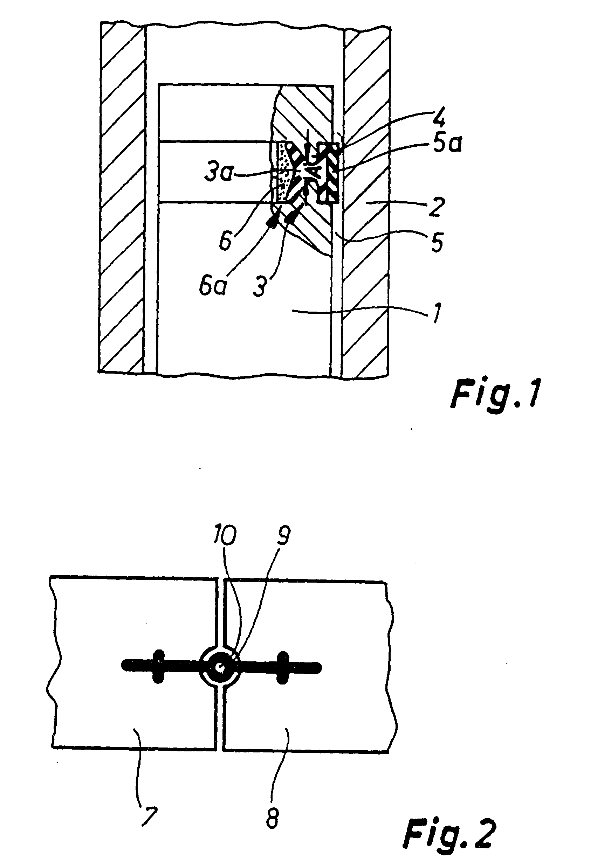

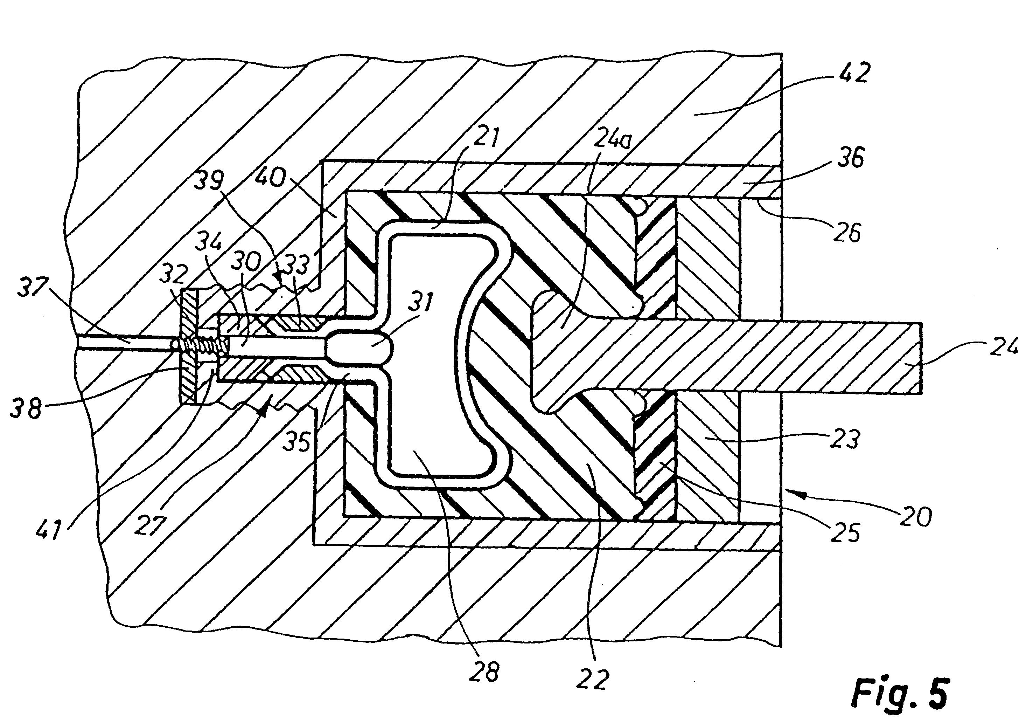

Fig. 1 illustrates the sealing of e.g. a rotatable shaft 1 against a body or jacket portion 2. In the embodiment of fig. 1, an elastomer layer 3a is fitted in a sealing space 3 whose edges are provided with inwardly directed protrusions 4. These protrusions 4 build therebetween a section A which is substantially narrower than the rest of the sealing space. The elastomer layer is directly moulded in situ on either side of the narrower section A, thus producing a massive sealing layer. Between the inner surface of sealing layer 3a and the bottom of sealing space 3 is provided a space 6a for hydraulic fluid 6 or compressed air or elastomer medium. On top of sealing layer 3a is preferably mounted a sealing means 5a, made of e.g. a harder elastomer, for effecting the actual sealing. Sealing means 5a is preferably vulcanized to be integral with sealing layer 3a. Operation of the sealing e.g. by means of a hydraulic fluid proceeds in a manner that hydraulic fluid 6 is pressurized by using a pressurizing unit 20, described later and shown in fig. 5, whereby the hydraulic fluid applies pressure to sealing layer 3a resulting in a displacement of the sealing layer outwards and, through the action of narrow section A, a deformation in sealing 3a as well as the orientation of forces created in sealing 3a substantially against protrusions 4. This deformation of sealing 3a together with the orientation of forces against protrusions 4 prevents the removal of sealing 3a from the sealing space under pressure. The movement of sealing layer 3a produces a pressure effect on the harder sealing means 5a urging it against body portion 2 so as to seal or pack a gap 5 between body portion and shaft portion. As the pressure exerted by hydraulic fluid is finished, said sealing 3a resumes its shape through the action of a return force produced by the effect of narrow section A.

The embodiment of fig. 2 shows an example of the packing of a joint between two concrete elements 7, 8. In this embodiment, inside a sealing 9 there is built a space 10 for a pressure medium. This space is formed e.g. in a manner that around a non-reinforced two-component elastomer tube is directly cast in situ a sealing 9 or a prefabricated sealing 9 is provided in a hole extending therethrough with a non-reinforced two-component elastomer tube. Sealing 9 is placed or moulded in the seal ing spaces made in both surfaces to be sealed. The sealing can be made pressure resistant by supplying said space 10 with a pressurized hydraulic fluid or compressed air or some elastomer medium, whereby the pressuriztion of hydraulic fluid can be effected e.g. by means of a pressurizing unit 20 shown in fig. 5.

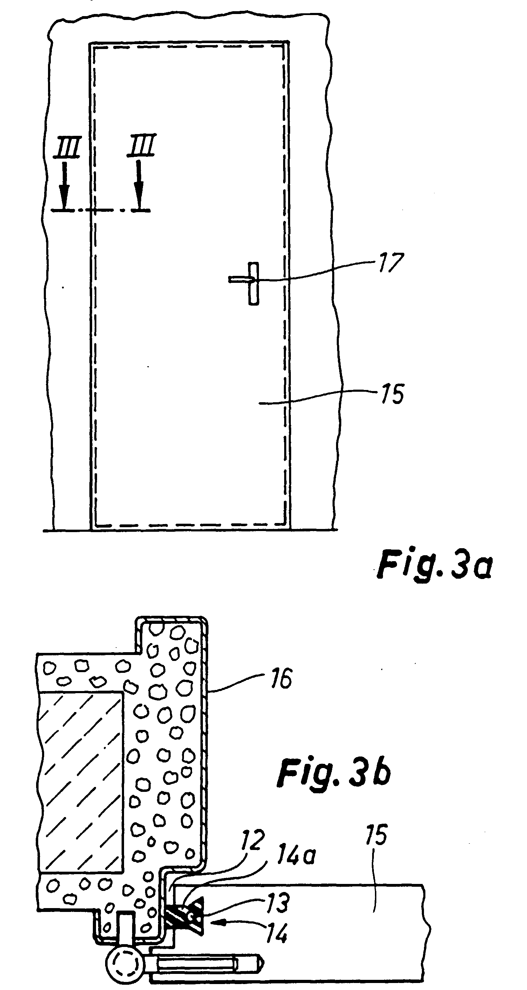

The embodiments of figs. 3a and 3b illustrate the use a sealing of the invention for sealing a door. In the embodiment, a sealing space 14 is preferably designed a dovetail groove in the edge of a door to extend around the entire periphery of a door. The sealing space 14 is fitted with a sealing layer 14a by casting it directly in situ around a non-reinforced two-component elastomer tube 13, preferably near the bottom of sealing space 14, whereby the pressurization of said tube 13 with the application of a hydraulic fluid can be effected by means of a pressurizing unit shown in fig. 5. As pressurized hydraulic fluid is supplied therein, said tube 13 expands resulting in a deformation in elastomer layer 14a which, upon its outward expansion/displacement, seals a gap 12 between door 15 and jamb 16.

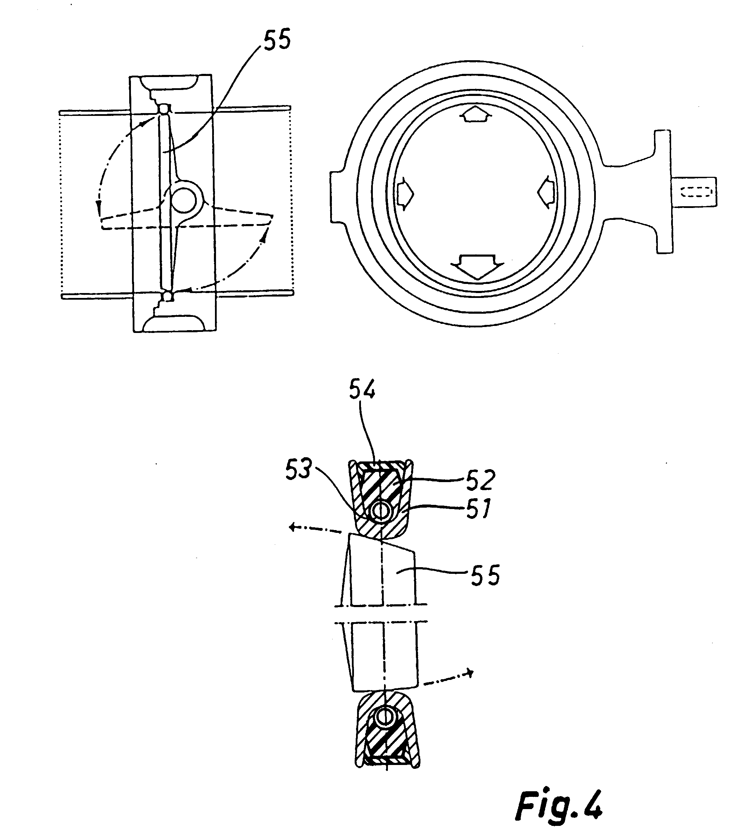

Fig. 4 illustrates the use of a sealing of the invention in a flap valve. A flap 55 is normally sealed e.g. by means of a metal gasket 51 having a U-shaped cross-section. The performance of this gasket can be improved in accordance with the invention by casting an elastomer layer 52 in the groove of metal gasket 51. The casting is preferably effected on top of an elastomer tube 53 fitted in the groove, said tube being connected with pressurization means for pressurizing the tube with an appropriate medium, such as hydraulic oil, compressed air or elastomer. On top of elastomer layer 53 is preferably laid a sealing layer 54 which is made e.g. of harder elastomer. This solution can also be effected e.g. in a manner that an elastomer tube 53 fitted in the groove of a metal gasket matches in its cross-section substantially the size of said groove, the elastomer being only cast inside said tube while the tube serves as a means carrying said sealing layer 54.

The pressurization of sealings of the invention is preferably effected by means of a pressurizing unit 20 shown in fig. 5. The pressurizing unit 20 preferably comprises a bushing-like body portion 36, fitted with a bottom section 40 for building a cavity 26 inside said body portion 36. The bottom section 40 is provided with a protrusion 39, fitted with an externally threading and extending outward of cavity 26. Protrusion 39 is provided with a hole extending into cavity 26 and preferably fitted with an internal flange 41 at the end of protrusion 39 away from cavity 26. The cavity 26 of body portion 36 includes a space 28 for hydraulic fluid 7 e.g. by means of an elastomeric membrane 21 and a massive elastomer layer 22. In order to connect sapce 28 to a tube 37, the bottom of cavity 26 is provided with a coupling 27, comprising a connector tube 30 which has an internal hole and one end of which is provided with an expansion 31 and the other end with a threaded portion 32. The coupling further includes a separate "bead" portion 33 and a separate sleeve portion 34. The coupling 27 is assembled in a manner that the bottom of membrane 21 carries a tubing section 35 which is pushed on top of the connector tube expansion 31 to extend beyond said expansion in the longitudinal direction. This is followed by placing said bead portion 33 on top of connector tube 30 from the end facing said threaded portion 32 and pushing it on top of tubing section 35 into the abutment with expansion 31. The bead portion 33 is preferably designed to include internal cones at both ends thereof. This is followed by placing said sleeve portion 34 on top of connector tube 30 from the threaded end 32 and pushing it against bead portion 33 in a manner that said tubing section 35 is retained between bead 33 and sleeve 34. Finally, said connector tube 30 is fastened to body portion 36 by means of a nut 38 to be fastened to said threaded portion 32 extending through the hole of protrusion 39, said nut being tightened to a suitable tightness. The elastomer layer 22 surrounds membrane 21 completely up to coupling 27. The section between layer 22 and the outer surface of body portion 36 further includes a piston 23 and between piston 23 and layer 22 there is also a gasket 25, made e.g. of teflon or copper. In addition, the unit 20 preferably includes a plunger 24 which extends through piston 23 and gasket 25 into elastomer layer 22. The inner end of plunger 24 is provided with an enlargement 24a for improved adherence to layer 22. The movement of piston 23 and plunger 24 is effected e.g. by means of hydraulic or pneumatic or mechanical or the like conventional equipment. The space 28 can also be formed in a manner that the coupling member 27 is mounted on body portion 36 without any separate membrane 21 and its tubing section. This is followed by placing in cavity 26 an element made of e.g. stearine or a similar material, which serves as a mould for space 28. This is followed by casting an elastomer layer 22 in the cavity and this layer is kept under pressure until it is solidified. Being under pressure, the elastomer penetrates into a gap between the conical surfaces of bead portion 33 and sleeve portion 34 setting in its position. After the elastomer is set, the stearine block formed in space 28 is melted by heating for draining the stearine out along the internal hole of connector tube 30. Finally, the pressurizing unit is attached to a cavity built e.g. in a separate body element 42, the bottom of said cavity being provided with a threaded hole for protrusion 39, whereby said threaded hole can be sealed in a conventional manner, e.g. by means of a teflon strip. The bottom of the threaded hole in the cavity of body element 42 is further provided with a hydraulic tube 37 which can be further connected to a tube internal of the sealing e.g. by means of the above-described coupling 27. This arrangement is capable of providing a closed assembly in a manner that the hydraulic oil in the system is contained in a passage confined at any given time by massive elastomer layers and thus, in practice, there are no holes for spills to occur.

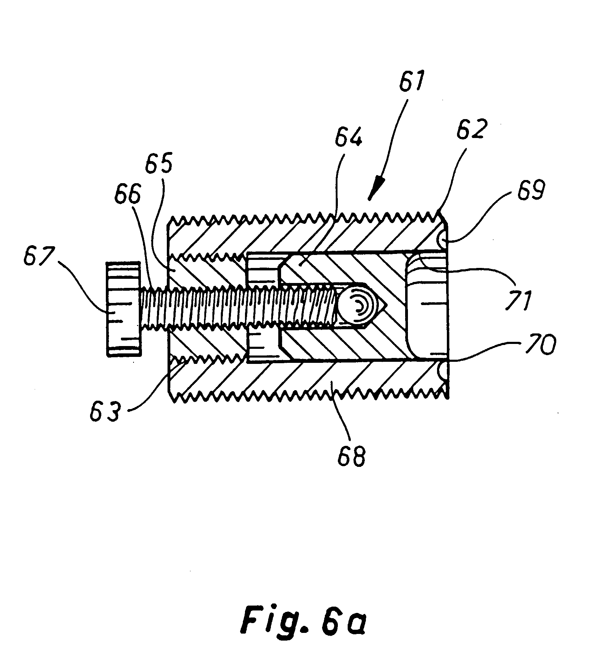

Figs. 6a-6c illustrate some embodiments for mechanical pressurizing media used in sealings of the invention. In this connection, a mechanical pressurizing medium means that a pressurizing element (e.g. a piston, a rod or the like) produces a pressure effect directly in the elastomer or elastomer medium which makes up a sealing layer. On the other hand, the elastomer medium can join directly with said sealing layer or through the intermediary of hydraulic oil, whereby the system can be referred to as hydro-mechanical, thus corresponding in principle to the hydraulic oil pressurizing unit shown in fig. 5.

In the embodiment shown in fig. 6a, a pressure medium 61 comprises an outer piston member 68 provided with a threaded portion 62 and having inside it an inner piston 64. The inner piston 64 is operated e.g. by means of a screw member 66, said screw member being connected to outer piston 68 with a threading 63 through a spacer block 65. The screw member 66 is further provided with an operating head 67. The inner piston can also be operated e.g. by means of an eccentric or some other per se known mechanical element. The outer piston member 68 is used for fixing the pressure medium 61 e.g. to the body section of a piece to be sealed. and it also serves as an initial pressure adjuster. The inner pistion 64 performs the actual pressurization. The front surface of outer piston 68 facing the elastomer space or medium is preferably provided with a groove 69, the inner edge of outer piston 68 being formed with a lip portion 70 for preventing the passage of elastomer between inner piston 64 and the internal surface of outer piston 68 as said inner piston 64 extends beyond said front surface of outer piston 68. The inner piston 64 is provided with a corresponding lip portion 61 for preventing the passage of elastomer between inner and outer piston as said piston 64 is positioned inside outer piston 68. At its end facing the elastomer, said inner piston 64 can be designed e.g. wedge-shaped for a more uniform distribution of the pressure applied to elastomer.

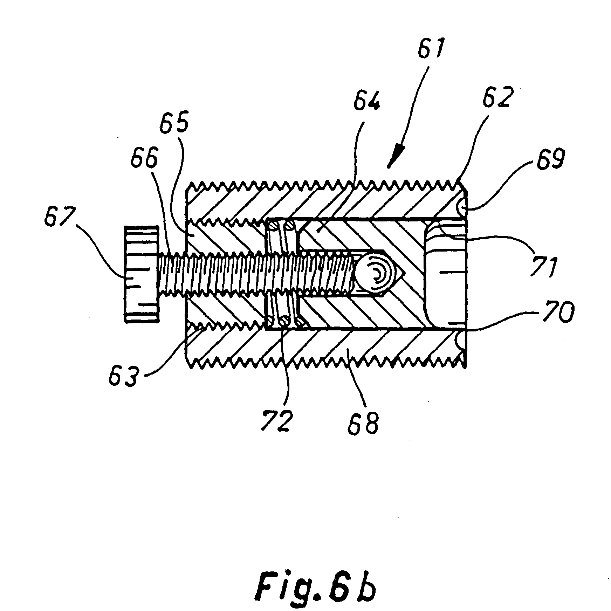

Fig. 6b illustrates a pressure medium similar to that of fig. 6a but fitted with a spring 72 which compensates for variations in the volume/pressure of elastomer caused by variations of temperature. This type of volume/pressure control can also be achieved by controling the temperature e.g. by means of electric resistances or the like.

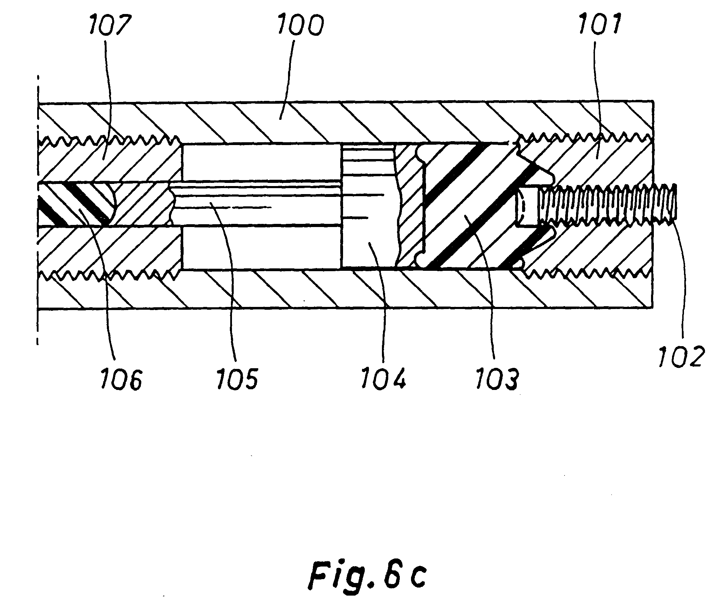

Fig. 6c illustrates an embodiment, comprising a plurality of different size pistons connected successively to each other. For example a screw thread is used for providing a body section 100 with a spacer block 101, fitted with a first piston or rod 102. The first piston acts on a first elastomer layer 103 which trnsmits the pressure to a second piston 104, having a surface area substantially larger than that of said first piston 102. The surface of second piston 104 facing away from first elastomer layer 103 is provided with a third piston 105, having a surface area substantially smaller than that of said second piston 104. The third piston 105 produces an increased pressure on a second elastomer layer 106 inside an inner tube 107, said piston assembly serving as a pressure booster or amplifier. The direction of amplification depends on the ratio of the piston surface areas to each other.

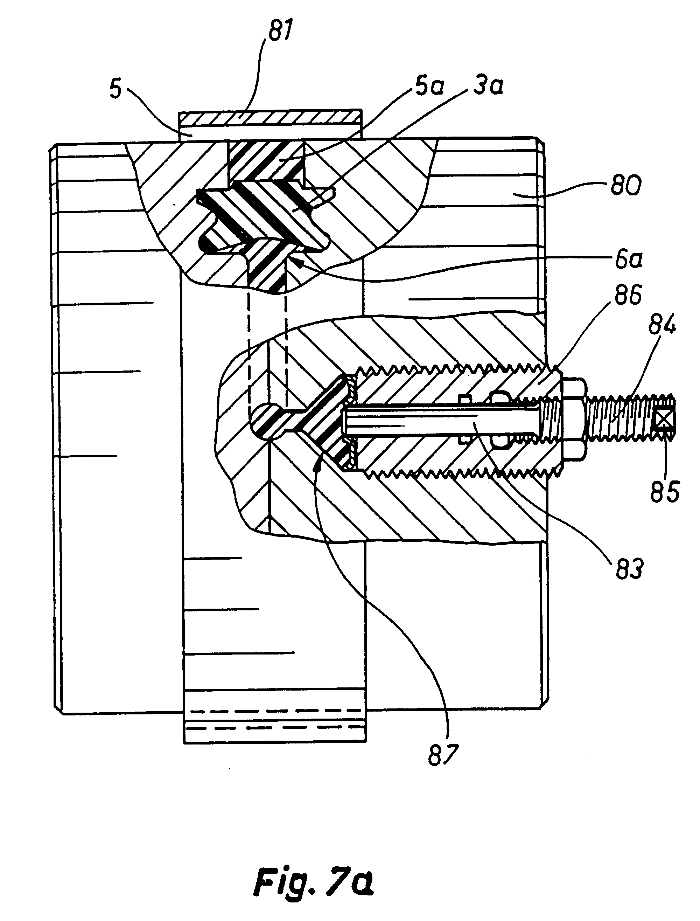

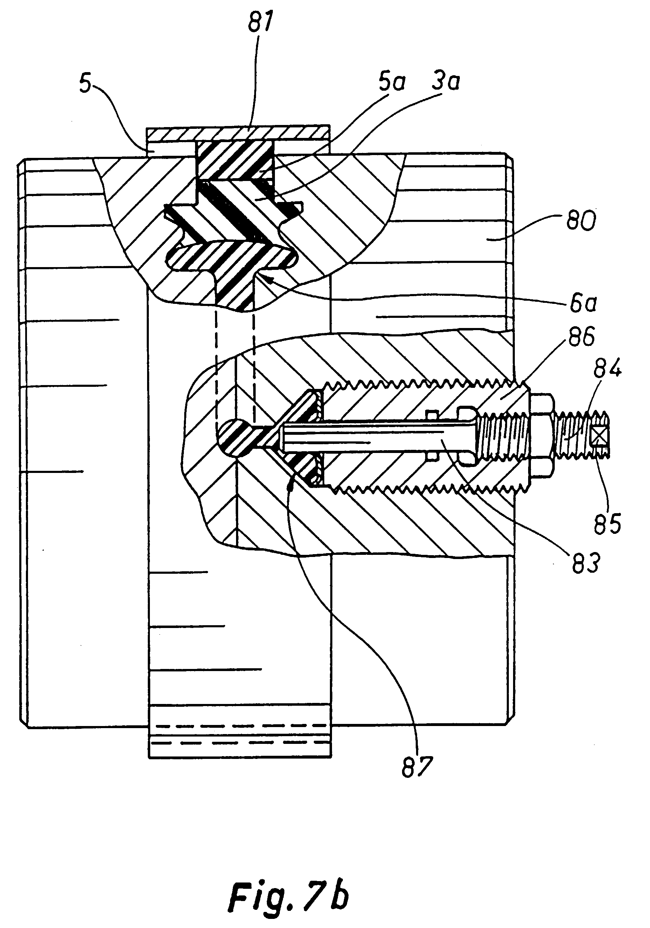

Figs. 7a and 7b illustrate a combination of a mechanical pressurizing means and a sealing. Fig. 7a shows the combination in an initial position and fig. 7b in an activated position. The closed system shown in figs. 7a and 7b comprises a pressurizing element and a sealing assembly connected with a body section 87, said body section being preferably formed of two components mounted one after the other in axial direction. The pressurizing element comprises a cylinder member 86, fixed with a screw threading to a body section 80. Inside said cyliner member 86 is fitted a piston 83 provided with a threaded portion 84. The bottom of a threaded hole in body section 80 is provided with a tapered elastomer space 87 for elastomer medium. The front surface of cylinder member 87 abutting said elastomer space 87 is provided with a gasket member 88 for preventing the passage of elastomer into a gap between piston 84 and cylinder member 86 and into a gap between cylinder member 86 and body section 80. The elastomer medium is connected with a passage 89 to sealing space 3. The sealing assembly comprises a sealing layer 3a as well as a sealing member 5a of a harder material. The assembly of figs. 7a and 7b can be put together e.g. in a manner that sealing member 5a is placed in position between the halves of body section 80, followed by joining the body section halves together, e.g. by means of a screw connection (not shown). This is followed by fitting cylinder member 86 in its position and by carrying out elastomer casting with the help of piston 84 for laying the elastomer in its location. Thus, the elastomer medium comprises the same material as sealing layer 3a. Sealing layer 3a can also be cast separately e.g. by providing separate casting gates leading into sealing space 3 and by blocking passage 89 e.g. with a wax plug that can be removed after the sealing layer is set. The wax plug can be removed e.g. by vapourization or by using appropriate chemicals. In this case, the medium can also comprise a hydraulic oil, whereby the sealing layer is cast first, the wax plug is removed, passage 89 is filled with oil and an elastomer layer is cast in medium-elastomer space 87.

The pressurization of sealings of the invention can also be effected e.g. by supplying into a space in the sealing some pressurized two-component material which is allowed to set prior to the removal of pressure. Thus, the sealing can be maintained in activated state for a continuous sealing effect.

The sealing assembly can naturally be different from those described above. For example, in the case shown in fig. 1, the sealing can be fitted in jacket member 2 instead of shaft 1.

## Claims

1. A sealing for sealing a gap (5,11,12) between two surfaces, said sealing or a part thereof being formed by a massive elastomer layer (3a, 9a, 14a), preferably two-component silicone or two-component polyurethane, whereby, as the sealing is subjected to pressure mechanically and/or through the action of a pressure medium (6), the pressure medium being one of the following: hydraulic fluid, compressed air or elastomer, such pressure produces the displacement and/or deformation/expansion of the elastomer layer being displaceable in a sealing space (3,14) provided in at least one of the surfaces to be sealed whereby the elastomer achieves the sealing of the gap (5, 11, 12),
characterized in that
said elastomer layer (3a, 9a, 14a) is cast in situ in said sealing space (3, 14) in a manner that it does not adhere to the walls of the sealing space (3, 14), and that the elastomer layer (3a) is further provided with a separate sealing member (5a), for example of a harder elastomer, metal or a like sealing material the sealing member effecting the actual sealing by being urged against the surface opposite the sealing space.

2. A sealing as set forth in claim 1, **characterized** in said sealing member (5a) is set in position prior to the casting of elastomer (3a).

3. A sealing as set forth in claim 2, **characterized** in that the sealing space is provided with at least one point narrower than the rest of the sealing space, said point being located in the region between pressurizing side and sealing side, whereby the pressure applied to sealing (3a) from inside sealing space (3) produces the displacement and/or deformation of sealing (3a) and the orientation of forces produced in sealing (3a) substantially against the walls of said narrow point for thus preventing the detachment of sealing (3a) from sealing space (3) under pressure and, furthermore, the narrow point serves to produce a force returning sealing (3a) to its position at the end of pressure effect.

4. A sealing as set forth in claim 3, **characterized** in that elastomer layer (3a) is cast in situ in sealing space (3) whose edge(s) is provided with an inward-directed protrusion (4) for producing in sealing space (3) a point (A) substantially narrower than the rest of the sealing space.

5. A sealing as set forth in claim 1, **characterized** in that inside said sealing (9, 14a) is provided a space (10, 13) for hydraulic fluid, compressed air or elastomer medium by casting the elastomer layer in situ around a non-reinforced, two-component elastomer tubing, the pressurization of said space (10, 13) or tubing being effected respectively by means of a hydraulic fluid pressurizing unit (20), a pneumatic device or a mechanical pressurizing medium.

6. A sealing as set forth in claim 5, **characterized** in that said hydraulic fluid pressurizing unit (20) comprises a body section (36) provided with a bottom section (40), whereby a cavity (26) is formed inside said body section (36), the bottom section (40) being fitted with a protrusion (39) provided with an external threaded portion, said protrusion (39) being provided with a hole extending into said cavity (26), that said cavity (26) is provided with a space (28) for hydraulic fluid (7) by means of a massive elastomer layer (22) and/or a membrane (21), and that in order to connect space (28) to a hydraulic tube (37) leading to said intra-sealing space (10, 13), the bottom of cavity (26) is provided with a coupling (27) substantially in a hole inside protrusion (39).

7. A sealing as set forth in claim 6, **characterized** in that between the elastomer layer (22) and the mouth of said cavity (26) is fitted a piston (23) which is separated by means of a gasket (25) from elastomer layer (22), said piston (23) and gasket (25) being penetrated by a plunger (24) into elastomer layer (2-2).

8. A sealing as set forth in claim 7, **characterized** in that the inner end of plunger (24) is provided with an enlargement (24a) for maintaining the plunger (24) in engagement by means of the elastomer layer (22) during the oppositely directed movements of said piston.

9. A sealing as set forth in any of claims 1 - 5, **characterized** in that pressurization of the sealing is effected by means of a mechanical pressurizing medium, said pressurizing medium being directly contacted with a sealing layer or elastomer medium which, in turn, is in direct contact with the sealing layer.

10. A sealing as set forth in claim 9, **characterized** in that the pressurizing medium is used hydraulically, pneumatically, electrically, mechanically or by some other per se known technique.

## Patentansprüche

1. Dichtung zum Abdichten eines Spaltes (5, 11, 12) zwischen zwei Flächen, wobei die Dichtung oder ein Teil davon aus einer massiven Elastomerschicht (3a, 9a, 14a), vorzugsweise Zweikomponenten-Silikon oder Zweikomponenten-Polyurethan gebildet ist, so daß, wenn die Dichtung mechanisch und/oder durch die Wirkung eines Druckmediums (6) Druck ausgesetzt wird, wobei das Druckmedium eines der folgenden ist: hydraulisches Fluid, Druckluft oder ein Elastomer, solch ein Druck die Verschiebung und/oder Verformung/Expansion der Elastomerschicht bewirkt, die in einem Dichtraum (3, 14) verschiebbar ist, der in wenigstens einer der abzudichtenden Flächen vorgesehen ist, so daß das Elastomer die Abdichtung des abzudichtenden Spaltes (5, 11, 12) erzielt,
**dadurch gekennzeichnet, daß**
die Elastomerschicht (3a, 9a, 14a) im Dichtspalt (3, 14) in situ derart gegossen wird, daß sie nicht an den Wänden des Dichtraumes (3, 14) haftet, und daß die Elastomerschicht (3a) außerdem mit einem gesonderten Dichtungselement (5a) z.B. aus einem härteren Elastomer, Metall oder dgl. Dichtmaterial versehen ist, wobei das Dichtungselement die tatsächliche Abdichtung dadurch bewirkt, daß es gegen die Fläche gegenüber dem Dichtraum gedrückt wird.

2. Dichtung nach Anspruch 1,
**dadurch gekennzeichnet, daß**
das Dichtungselement (5a) vor dem Gießen des Elastomeren (3a) in Position gebracht wird.

3. Dichtung nach Anspruch 2,
**dadurch gekennzeichnet, daß**
der Dichtraum mit wenigstens einer Stelle versehen ist, die schmäler als der übrige Dichtraum ist, wobei die Stelle im Bereich zwischen der Druckbeaufschlagungsseite und der Abdichtseite liegt, so daß der auf die Dichtung (3a) von innerhalb des Dichtraumes (3) aufgebrachte Druck die Verschiebung und/oder Verformung der Dichtung (3a) und die Orientierung von Kräften, die in der Dichtung (3a) erzeugt werden, im wesentlichen gegen die Wand der schmäleren Stelle bewirkt, so daß das Lösen der Dichtung (3a) vom Dichtraum (3) unter Druck vermieden wird, und außerdem die schmale Stelle dazu dient, eine Kraft zu erzeugen, die die Dichtung (3a) in ihre Position am Ende der Dichtwirkung zurückstellt.

4. Dichtungsanordnung nach Anspruch 3,
**dadurch gekennzeichnet, daß**
die Elastomerschicht (3a) in situ im Dichtraum (3) gegossen ist, deren Kante(n) mit einem nach innen gerichteten Vorsprung (4) versehen ist, um im Dichtraum (3) eine Stelle (A) zu erzeugen, die wesentlich schmäler als der übrige Dichtraum ist.

5. Dichtung nach Anspruch 1,
**dadurch gekennzeichnet, daß**
innerhalb der Dichtung (9, 14a) ein Raum (10, 13) für Hydraulikfluid, Druckluft oder ein Elastomermedium durch Gießen der Elastomerschicht in situ um ein nicht verstärktes Zweikomponenten-Elastomer-Rohr geschaffen ist, wobei die Druckbeaufschlagung des Raumes (10, 13) oder des Rohres jeweils mittels einer Hydraulikfluid-Druckbeaufschlagungseinheit (20), einer pneumatischen Vorrichtung oder einem mechanischen Druckbeaufschlagungsmedium bewirkt wird.

6. Dichtung nach Anspruch 5,
**dadurch gekennzeichnet, daß**
die Hydraulikfluid-Druckbeaufschlagungseinheit (20) einen Körperabschnitt (36) aufweist, der mit einem Bodenabschnitt (40) versehen ist, so daß ein Hohlraum (26) innerhalb des Körperabschnitts (36) gebildet wird, wobei der Bodenabschnitt (40) mit einem Vorsprung (39) versehen ist, der einen Außengewindeabschnitt hat, und der Vorsprung (39) eine Öffnung aufweist, die sich in den Hohlraum (26) erstreckt, daß der Hohlraum (26) mit einem Raum (28) für ein Hydraulikfluid (7) mittels einer massiven Elastomerschicht (22) und/oder einer Membran (21) versehen ist, und daß, um den Raum (28) mit einem Hydraulikrohr (37) zu verbinden, das zu einem Innendichtraum (10, 13) führt, der Boden des Hohlraumes (26) mit einer Kupplung (27) im wesentlichen in einer Öffnung innerhalb des Vorsprunges (39) versehen ist.

7. Dichtung nach Anspruch 6,
**dadurch gekennzeichnet, daß**
zwischen der Elastomerschicht (22) und der Mündung des Hohlraumes (26) ein Kolben (23) eingesetzt ist, der mittels einer Dichtscheibe (25) von der Elastomerschicht (22) getrennt ist, wobei der Kolben (23) und die Dichtscheibe (25) von einem Kolben (24) in die Elastomerschicht (22) durchdrungen ist.

8. Dichtung nach Anspruch 7,
**dadurch gekennzeichnet, daß**
das innere Ende des Kolbens (24) mit einer Erweiterung (24a) versehen ist, um den Kolben (24) mittels der Elastomerschicht (22) während der entgegengesetzt gerichteten Bewegungen des Kolbens in Eingriff gehalten wird.

9. Dichtung nach einem der Ansprüche 1 - 5,
**dadurch gekennzeichnet, daß**
die Druckbeaufschlagung der Dichtung mittels eines mechanischen Druckbeaufschlagungsmediums bewirkt wird, wobei das Druckbeaufschlagungsmedium direkt mit einer Abdichtschicht oder einem Elastomermedium in Kontakt steht, die bzw. das wiederum mit der Abdichtschicht in direktem Kontakt steht.

10. Dichtung nach Anspruch 9,
**dadurch gekennzeichnet, daß**
das Druckbeaufschlagungsmedium hydraulisch, pneumatisch, elektrisch, mechanisch oder durch eine andere bekannte Technik angewandt wird.

## Revendications

1. Joint d'étanchéité pour fermer hermétiquement un intervalle (5, 11, 12) entre deux surfaces, ledit joint d'étanchéité, ou une partie de celui-ci, étant formé par une couche massive (3a, 9a, 14a) d'élastomère, de préférence un silicone à deux composants ou un polyréthane à deux composants, grâce à quoi, lorsque le joint d'étanchéité est soumis à une pression mécaniquement et/ou du fait de l'action d'un agent sous pression (6), l'agent sous pression étant l'un des agents suivants: un fluide hydraulique, de l'air ou un élastomère sous pression, cette pression produit le déplacement et/ou une déformation/dilatation de la couche d'élastomère qui peut être déplacée dans l'espace d'étanchéité (3, 14) formé dans au moins une des surfaces (3, 14), l'élastomère assurant ainsi la fermeture hermétique de l'intervalle (5, 11, 12),
caractérisé en ce que:
ladite couche (3a, 9a, 14a) d'élastomère est coulée in situ dans ledit espace d'étanchéité (3, 14) d'une manière telle qu'il n'adhère pas aux parois de l'espace d'étanchéité (3, 14) et en ce que la couche (3a) d'élastomère est en outre pourvue d'une élément d'étanchéité séparé (5a), par exemple un élastomère plus dur, un métal ou autre matériau d'étanchéité analogue, l'élément d'étanchéité effectuant la fermeture hermétique réelle par le fait qu'il est poussé contre la surface située en face de l'espace d'étanchéité.

2. Joint d'étanchéité selon la revendication 1, caractérisé en ce que ledit élément d'étanchéité (5a) est mis en position avant le coulage de l'élastomère (3a).

3. Joint d'étanchéité selon la revendication 2, caractérisé en ce que l'espace d'étanchéité est pourvu d'au moins un point plus étroit que le reste de l'espace d'étanchéité, ledit point se trouvant dans la région comprise entre le côté sous pression et le côté d'étanchéité, la pression appliquée au joint d'étanchéité (3a) depuis l'espace d'étanchéité intérieur (3) produisant ainsi le déplacement et/ou la déformation du joint d'étanchéité (3a) et l'orientation des forces produites dans le joint d'étanchéité (3a) sensiblement contre les parois dudit point étroit pour empêcher ainsi le joint d'étanchéité (3a) de se séparer de l'espace d'étanchéité (3) sous l'action de la pression et, en outre, le point étroit sert à produire une force ramenant le joint d'étanchéité (3a) dans sa position à la fin de l'action de la pression.

4. Joint d'étanchéité selon la revendication 3, caractérisé en ce que la couche (3a) d'élastomère est coulée in situ dans l'espace d'étanchéité (3) dont le (les) bord(s) est (sont) pourvu(s) d'une saillie (4) dirigée vers l'intérieur pour créer, dans l'espace d'étanchéité (3), un point (A) sensiblement plus étroit que le reste de l'espace d'étanchéité.

5. Joint d'étanchéité selon la revendication 1, caractérisé en ce qu'à l'intérieur dudit joint d'étanchéité (9, 14a) est prévu un espace (10, 13) pour un fluide hydraulique, de l'air ou un agent élastomère sous pression, par coulage de la couche élastomère in situ autour d'un tube en élastomère non renforcé à deux composants, la mise sous pression dudit espace (10, 13) ou du tube étant effectuée respectivement au moyen d'un dispositif de mise sous pression (20) à fluide hydraulique, d'un dispositif pneumatique ou d'un agent mécanique de mise sous pression.

6. Joint d'étanchéité selon la revendication 5, caractérisé en ce que ledit dispositif de mise sous pression (20) à fluide hydraulique comprend une section de corps (36) pourvue d'une section de fond (40), une cavité (26) étant ainsi formée à l'intérieur de ladite section de corps (36), la section de fond (40) étant munie d'une saillie (39) pourvue d'une partie extérieure filetée, ladite saillie (39) étant pourvue d'une trou s'étendant jusque dans ladite cavité (26), en ce que ladite cavité (26) est pourvue d'un espace (28) pour un fluide hydraulique (7) au moyen d'une couche massive (22) d'élastomère et/ou d'une membrane (21), et en ce que pour raccorder l'espace (28) à un tube hyraulique (37) menant à l'intérieur dudit espace d'étanchéité (10, 13), le fond de la cavité (26) est pourvue d'un élément d'accouplement (27) situé sensiblement dans un trou à l'intérieur de la saillie (39).

7. Joint d'étanchéité selon la revendication 6, caractérisé en ce que, entre la couche (22) d'élastomère et l'entrée de la cavité (26) est monté un piston (23) qui est séparé de la couche (22) d'élastomère au moyen d'un joint (25), ledit piston (23) et ledit joint (25) étant percés par un plongeur (24) pénétrant dans la couche (22) d'élastomère.

8. Joint d'étanchéité selon la revendication 7, caractérisé en ce que l'extrémité intérieure du plongeur (24) est pourvue d'une partie agrandie (24a) destinée à maintenir le plongeur (24) en prise avec la couche (22) d'élastomère pendant les déplacements, dirigés dans des sens opposés, dudit piston.

9. Joint d'étanchéité selon l'une quelconque des revendications 1-5, caractérisé en ce que la mise sous pression du joint d'étanchéité est effectuée au moyen d'un agent de mise sous pression mécanique, ledit agent de mise sous pression étant directement en contact avec une couche d'étanchéité ou un agent élastomère qui, à son tour, est en contact direct avec la couche d'étanchéité.

10. Joint d'étanchéité selon la revendication 9, caractérisé en ce que l'agent de mise sous pression est utilisé par voie hydraulique, par voie pneumatique, par voie électrique, par voie mécanique ou par tout autre technique connue en soi.
